(19) Europäisches Patentamt
European Patent Office
Office européen des brevets

(11) Veröffentlichungsnummer: **0 107 765**
**B1**

(12) # EUROPÄISCHE PATENTSCHRIFT

(45) Veröffentlichungstag der Patentschrift: **25.01.89**

(51) Int. Cl.⁴: **C 07 F 7/18**, C 07 F 7/04

(21) Anmeldenummer: **83108801.8**

(22) Anmeldetag: **07.09.83**

(54) **Verfahren zur kontinuierlichen Herstellung von Alkoxysilanen.**

(30) Priorität: **04.10.82 DE 3236628**

(43) Veröffentlichungstag der Anmeldung: **09.05.84 Patentblatt 84/19**

(45) Bekanntmachung des Hinweises auf die Patenterteilung: **25.01.89 Patentblatt 89/4**

(84) Benannte Vertragsstaaten: **AT BE CH DE FR GB IT LI LU NL SE**

(56) Entgegenhaltungen:
**EP-A-0 032 376**
**DD-C-31 751**
**DE-A-2 061 189**
**DE-C-862 895**
**GB-A-612 646**
**US-A-3 448 138**

(73) Patentinhaber: **HÜLS TROISDORF AKTIENGESELLSCHAFT, Postfach 11 65, D-5210 Troisdorf (DE)**

(72) Erfinder: **Fischer, Peter, Untere Dorfstrasse 69, D-7888 Rheinfelden (DE)**
Erfinder: **Groh, Reiner, Dr., Bonner Str. 46, D-5216 Niederkassel (DE)**
Erfinder: **Vahlensieck, Hans- Joachim, Dr., Im Habiken 2, D-7867 Wehr (DE)**

**EP 0 107 765 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft ein Verfahren zur kontinuierlichen Herstellung von monomeren oder oligomeren Alkoxysilanen durch Veresterung von Chlorsilanen mit Alkoholen, ggf. in Anwesenheit von Wasser.

Die Umsetzung von an Silicium gebundenem Chlor mit Alkoholen zu Alkoxysilanen ist bereits seit Mitte des 19. Jahrhunderts bekannt (vgl. z. B. Ebelmann, Ann.chim.pharm. 52, 322 (1844), 57, 319 (1846); Friedel, Crafts, Ann.chim.Phys. 2 (4), 3 (1866) ) und wird in verschiedenen Verfahren kommerziell genutzt.

Die Synthese kann dabei sowohl in der Gasphase als auch in flüssiger Phase erfolgen. Die bekannten Verfahren unterscheiden sich jedoch hauptsächlich dadurch voneinander, wie der bei der Umsetzung entstehende Chlorwasserstoff entfernt wird. Die Entfernung des Chlorwasserstoffs ist unbedingt notwendig, um 1) eine vollständige Umsetzung zu gewährleisten, 2) ein neutrales Produkt zu erhalten und 3) unerwünschte Nebenreaktionen, wie z. B. die Bildung von Alkylchloriden, zu verhindern. Gewünscht ist ein Chlorwasserstoffgehalt im Endprodukt unter 50 ppm, vorzugsweise unter 20 ppm.

Die Umsetzung von Chlorsilanen mit Alkoholen in flüssiger Phase in einem Rührwerksbehälter wird z. B. in der britischen Patentschrift 674 137 beschrieben. Auch die Umsetzung in einem Reaktionsrohr (DE-OS-2 033 373) oder in einer gepackten Säule (DE-OS-1 643 075) ist bekannt.

Ebenso sind bereits verschiedene Verfahren beschrieben, bei denen die Umsetzung in beheizten Füllkörperkolonnen oder Destillationskolonnen durchgeführt wird (vgl. z. B. A. Raskai, Chem. Techn. 9 (8), 463 (1957); DE-OS-2 061 189; DE-PS-2 427 085; DE-OS-2 806 036 und EP-0 032 376-A2).

Bei dem in der EP-0 032 376-A2 beschriebenen Verfahren wird die Umsetzung auch in zwei Reaktoren durchgeführt; dabei wird in jeden Reaktor ein Teilstrom des Alkohols frisch eingeführt und der überschüssige Alkohol mit dem Reaktionsprodukt abgezogen. Auch bei dieser Verfahrensweise kann die Bildung der obengenannten Nebenprodukte, die durch Umsetzung des nicht vollständig entfernten Chlorwasserstoffs mit dem Alkohol entstehen, bei einer kontinuierlichen Fahrweise nicht verhindert werden.

Zur Entfernung des Chlorwasserstoffs ist bereits der Einsatz von Inertgas in Berieselungs- bzw. Destillationskolonnen (deutsche Patentschrift 862 895; DDR-Patentschrift 31 751) beschrieben.

Die Entfernung des Chlorwasserstoffs kann weiterhin erfolgen durch Auskochen (ggf. in Anwesenheit eines inerten Lösungsmittels) oder Destillation des Rohproduktes (vgl. z. B. DE-OSs-2 061 189, 3 801 618, 2 409 731, 2 744 726, 2 800 017 und 2 806 036).

Alle diese bekannten Verfahrensweisen haben zumindest den Nachteil, daß die Umsetzung und insbesondere die Befreiung des Endproduktes von Chlorwasserstoff in mehreren Verfahrensschritten oder durch den ständigen Einsatz von Hilfsstoffen, die an der Reaktion nicht beteiligt sind, erfolgen muß.

Es bestand daher die Aufgabe, ein kontinuierliches Verfahren zu finden, das die Herstellung von monomeren und insbesondere von oligomeren Alkoxysilanen in der gewünschten Reinheit und ohne den Einsatz zusätzlicher Hilfsstoffe oder Verfahrensschritte erlaubt.

In Erfüllung dieser Aufgabe wurde ein Verfahren zur kontinuierlichen Herstellung von monomeren oder oligomeren Alkoxysilanen durch Umsetzung von Chlorsilanen mit Alkoholen und ggf. Wasser und Entfernung des bei der Umsetzung entstehenden Chlorwasserstoffs in einem Reaktor und einer sich daran anschließenden Kolonne, die von gasförmigem Alkohol durchströmt wird und auf deren Kopf das den Reaktor verlassende Reaktionsgemisch aufgegeben wird und von deren unterem Ende das chlorwasserstofffreie Endprodukt entnommen wird, gefunden, das dadurch gekennzeichnet ist, daß

a) das Chlorsilan in flüssiger Form dem Reaktor zugeführt wird,

b) die dem gewünschten Alkoxysilan entsprechende stöchiometrische Menge Alkohol gasförmig in den unteren Teil der Kolonne aufgegeben wird,

c) der am Kolonnenkopf austretende Alkohol kondensiert und in den Reaktor eingeleitet wird, und

c) ggf. die dem gewünschten oligomeren Alkoxysilan entsprechende stöchiometrische Menge Wasser in flüssiger Form in den Reaktor eindosiert wird.

Die nach dem beanspruchten Verfahren als Ausgangsprodukte einzusetzenden Chlorsilane entsprechen der allgemeinen Formel

$$R^1_aR^2_bSiCl_{4-a-b}$$

wobei a den Wert 3 oder 2 oder 1 oder 0 und b den Wert 1 oder 0 haben kann und weiter gilt:

$$(a-b) \leqq 3.$$

$R^1$ und $R^2$ stehen für Wasserstoff und gesättigte oder ungesättigte Kohlenwasserstoffreste, wobei letztere ggf. endständige funktionelle Gruppen z. B. Halogen besitzen können, die unter den gegebenen Reaktionsbedingungen nicht angegriffen werden.

Als Ausgangsprodukt können beispielsweise folgende Verbindungen eingesetzt werden:

Siliciumtetrachlorid, Trichlorsilan, iso-Butyltrichlorsilan, Octyltrichlorsilan, 3-Chlorpropyltrichlorsilan, 2-Cyanethyltrichlorsilan, 3-Methacryloxypropyltrichlorsilan,

Dimethyldichlorsilan, Vinylmethyldichlorsilan, Trimethylchlorsilan.

Die erfindungsgemäß eingesetzten Alkohole sind hauptsächlich einwertige aliphatische Alkohole mit vorzugsweise 1 bis 4 Kohlenstoffatomen, wobei die Kohlenstoffkette durch eine Ethergruppe unterbrochen sein kann. Als Beispiel für diese Alkohole seien Methanol, Ethanol und 2-Methoxyethanol genannt. Prinzipiell ist es auch möglich höhere Alkohole, Phenole oder andere Hydroxylgruppen enthaltende Verbindungen einzusetzen.

Als Reaktoren können übliche Reaktionsgefäße eingesetzt werden, die eine gute Durchmischung der Reaktionspartner gewährleisten. Die Kolonne wird in an sich bekannter Ausführung als Destillations- oder Desorptionskolonne eingesetzt.

Die Erfindung wird in der beigefügten Zeichnung beispielhaft erläutert. Die Einsatzstoffe werden über die mengengeregelten Durchflußmesser 1, 2 und 3 kontinuierlich im stöchiometrischen Verhältnis dosiert. Der eingesetzte Alkohol 1 wird im Wärmeaustauscher 4 verdampft und im unteren Bereich der Kolonne 5 aufgegeben, nach dem Austritt aus der Kolonne in Wärmeaustauscher 6 kondensiert und in flüssiger Form über den Durchflußmesser 7 und ein Tauchrohr 8 in den Reaktor 9 eingeleitet. Über dasselbe Tauchrohr 8 wird auch ggf. das Wasser vom mengengesteuerten Durchflußmesser 3 aufgegeben. Die Dosierung des Chlorsilans erfolgt über den mengengesteuerten Durchflußmesser 2 über ein zweites Tauchrohr 10 in den Reaktor. Der bei der Reaktion freiwerdende Chlorwasserstoff entweicht über einen Wärmeaustauscher 11.

Aus dem Reaktor 9 läuft ein Rohprodukt aus, das noch Chlorwasserstoff und ggf. noch nicht umgesetzten Alkohol oder noch nicht umgesetztes Chlorsilan enthält. Es wird auf den Kopf der Kolonne 5 gegeben. Das reine Endprodukt wird kontinuierlich der Kolonnenblase entnommen 12.

Die Reaktortemperatur in dem Reaktor 9 kann in einem weiten Bereich frei gewählt werden. Zweckmäßigerweise wird der Reaktor so hoch beheizt, daß einerseits die Löslichkeit von Chlorwasserstoff im Rohprodukt verringert wird aber andererseits noch keine merkliche Alkylchloridbildung eintritt. Dieser optimale Temperaturbereich ist von den Einsatzstoffen abhängig und liegt in der Regel zwischen 20 und 80°C.

Die Kolonnentemperatur muß höher sein als der Siedepunkt des eingesetzten Alkohols.

Die Komponenten werden in stöchiometrischem Verhältnis während des Verfahrens zudosiert. Durch die Wahl der Anfahrbedingungen kann jedoch das Verhältnis von Alkohol zu Chlorsilan im Reaktor praktisch beliebig variiert werden. Wird z. B. Rohprodukt mit einem gewissen Alkoholüberschuß im Reaktor vorgelegt, so wird dieser überschüssige Alkohol aus der Kolonne zwangsläufig wieder in den Reaktor zurückgeführt. Der Durchflußmesser 7 zeigt in diesem Fall einen höheren Wert an als der Durchflußmesser 1. Je größer der Unterschied ist, um so mehr Alkoholüberschuß enthält das Rohprodukt im Reaktor. Andererseits kann auch noch nicht vollständig umgesetztes Rohprodukt vorgelegt werden (Alkohol-Unterschuß). Die restliche Umsetzung findet dann in der Kolonne statt und der Durchflußmesser 7 zeigt einen niedrigeren Wert an als der Durchflußmesser 1. Auch diese Variante fällt unter die erfindungsgemäße Arbeitsweise.

Statt des überschüssigen Alkohols kann ggf. auch ein geeignetes inertes Lösungsmittel im Rohprodukt vorgelegt werden z. B. Toluol oder Chlorkohlenwasserstoffe. Auch in diesen Fall stellt sich ein Kreislauf zwischen Reaktor und Kolonne ein.

Voraussetzung ist auch hier, daß der Siedepunkt des Lösungsmittels niedriger ist als die Kolonnentemperatur. Diese unterschiedlichen Möglichkeiten der Verfahrensdurchführung erlauben in einfacher Weise die Einstellung optimaler Bedingungen der Umsetzung und Reinigung für verschiedene Produkte.

**Beispiel 1:**

Herstellung von Tetraethoxysilan.

In einem 40 Liter Reaktor mit Rührer, zwei Tauchrohren und solebetriebenem Wärmeaustauscher werden 10 Liter Rohprodukt folgender Zusammensetzung vorgelegt:

$SiCl_{0,4}(OC_2H_5)_{3,6}$. Über einen mengengesteuerten Durchflußmesser werden 80 Mol Ethanol pro Stunde gasförmig in den unteren Teil einer Kolonne geleitet. Die Kolonne besitzt eine Länge von 5 m und eine lichte Weite von 80 mm und ist mit Raschigringen 8 x 8 mm gefüllt. In der Kolonnenblase wurde reines Produkt vorgelegt und die Blasentemperatur wird ca. 5°C unter dem Siedepunkt des gewünschten Produkts gehalten. Der die Kolonne an Kopf verlassende Alkohol wird kondensiert und über ein Tauchrohr in den Reaktor geleitet, der auf einer Reaktortemperatur von ca. 40°C gehalten wird. Über den zweiten mengengesteuerten Durchflußmesser werden 20 Mol Siliciumtetrachlorid über das andere Tauchrohr ebenfalls in den Reaktor dosiert. Das aus dem Reaktor entnommene Rohprodukt wird auf den Kopf der Kolonne aufgegeben.

Aus der Kolonnenblase werden kontinuierlich ca. 4,1 kg Tetraethoxysilan mit einem Chlorwasserstoffgehalt von weniger als 10 ppm pro Stunde entnommen.

**Beispiel 2:**

Herstellung von polymeren Ethylsilikat.

In der in Beispiel 1 beschriebenen Apparatur werden 8 Liter Ethylsilikat mit einem Siliciumdioxidgehalt von 40 % und 2 Liter Ethanol vorgelegt.

Es werden in analoger Weise wie in Beispiel 1 120 Mol Ethanol und 50 Mol Silicilumtetrachlorid pro Stunde über die Dosiervorrichtungen 1 und 2 zudosiert.

Zusätzlich werden durch das erste Tauchrohr 40 Mol Wasser pro Stunde in den Reaktor eingeleitet. Die Reaktionstemperatur im Reaktor wurde auf ca. 50°C gehalten, die Kolonnentemperatur betrug etwa 160°C.

Aus der Kolonnenblase werden kontinuierlich ca. 7,4 kg/h Ethylsilikat mit 40 % Siliciumdioxid und weniger als 10 ppm Chlorwasserstoff entnommen.

**Beispiel 3:**

Herstellung von 3-Chlorpropyltrimethoxysilan.

In der in Beispiel 1 beschriebenen Apparatur werden 9,5 Liter Produkt und 0,5 Liter Methanol vorgelegt.

In analoger Weise wie in Beispiel 1 werden 45 Mol Methanol und 15 Mol 3-Chlorpropyltrichlorsilan pro Stunde dosiert. Die Reaktionstemperatur im Reaktor wurde auf ca. 60°C gehalten, die Kolonnentemperatur betrug etwa 140°C.

Aus der Kolonne werden kontinuierlich ca. 3,0 kg 3-Chlorpropyltrimethoxysilan mit weniger als 10 ppm Chlorwasserstoff entnommen.

**Beispiel 4:**

Herstellung von Dimethyldiethoxysilan.

In der in Beispiel 1 beschriebenen Apparatur werden 20 Liter Rohprodukt folgender Zusammensetzung vorgelegt:
$(CH_3)_2SiCl_{0,8}(OEt)_{1,2}$ In analoger Weise wie in Beispiel 1 werden 40 Mol Ethanol und 20 Mol Dimethyldichlorsilan pro Stunde dosiert.

Die Reaktionstemperatur im Reaktor wurde auf ca. 50°C gehalten, die Kolonnentemperatur betrug etwa 110°C. Aus der Kolonnenblase werden kontinuierlich ca. 3,0 kg Dimethyldiethoxysilan mit weniger als 10 ppm Chlorwasserstoff entnommen.

**Patentansprüche**

1. Verfahren zur kontinuierlichen Herstellung von monomeren oder oligomeren Alkoxysilanen durch Umsetzung von Chlorsilanen mit Alkoholen und gegebenenfalls Wasser und Entfernung des bei der Umsetzung entstehenden Chlorwasserstoffs in einem Reaktor und einer sich daran anschließenden Kolonne, die von gasförmigem Alkohol durchströmt wird und auf deren Kopf das den Reaktor verlassende Reaktionsgemisch aufgegeben wird und von deren unteren Ende das chlorwasserstofffreie Endprodukt entnommen wird, dadurch gekennzeichnet, daß

a) das Chlorsilan in flüssiger Form dem Reaktor zugeführt wird,

b) die dem gewünschten Alkoxysilan entsprechende stöchiometrische Menge Alkohol gasförmig in den unteren Teil der Kolonne aufgegeben wird

c) der am Kolonnenkopf austretende Alkohol kondensiert und in den Reaktor eingeleitet wird und

d) gegegebenfalls die dem gewünschten oligomeren Alkoxysilan entsprechende stöchiometrische Menge Wasser in flüssiger Form in den Reaktor eindosiert wird.

2. Verfahren gemäß Anspruch 1, dadurch gekennzeichnet, daß Alkohol und Chlorsilan dem Reaktor in einem konstanten Verhältnis zugeführt werden, das unabhängig von dem stöchiometrischen Verhältnis der Reaktionspartner im gewünschten Endprodukt ist.

3. Verfahren gemäß Anspruch 1 oder 2, dadurch gekennzeichnet, daß in dem Reaktor zusätzlich noch ein Lösungsmittel anwesend ist, dessen Siedepunkt niedriger ist als die Temperatur des am unteren Ende der Kolonne entnommenen Endprodukts.

**Claims**

1. Method for the continuous production of monomeric or oligomeric alkoxysilanes by reacting chlorosilanes with alcohols and if appropriate water and by removing the hydrogen chloride, produced in the reaction, in a reactor and a column connected to it, through which column gaseous alcohol flows and at the head of which the reaction mixture leaving the reactor is added and at the lower end of which the end product, which is free of hydrogen chloride, is removed, characterised in that

a) the chlorosilane is lead into the reactor in liquid form,

b) the stoichiometric quantity of alcohol, which corresponds to the desired alkoxysilane, is added in the lower part of the column in gaseous form,

c) the alcohol emerging at the column head is condensed and led into the reactor, and

d) if appropriate, the stoichiometric quantity of water, which corresponds to the desired oligomeric alkoxysilane, is dosed into the reactor in liquid form.

2. Method according to claim 1, characterised in that alcohol and chlorosilane are led into the reactor in a constant ratio which is independent

of the stoichiometric ratio of the coreactants in the desired end product.

3. Method according to claim 1 or 2, characterised in that an additional solvent is present in the reactor, its boiling point being lower than the temperature of the end product removed at the lower end of the column.

**Revendications**

1. Procédé pour la préparation en continu d'alcoxysilanes monomères ou oligomères par réaction de chlorosilanes avec des alcools et, le cas échéant, de l'eau et élimination de l'acide chlorhydrique formé au cours de la réaction dans un réacteur et dans une colonne s'y rattachant qui est parcourue par l'alcool gazeux, au sommet de laquelle est introduit le mélange réactionnel quittant le réacteur et au bas de laquelle est soutiré le produit final débarrassé de l'acide chlorhydrique, caractérisé en ce que

a) le chlorosilane est envoyé dans le réacteur à l'état liquide,

b) la quantité stoechiométrique d'alcool correspondant à l'alcoxysilane désiré est introduite dans le bas de la colonne à l'état gazeux,

c) l'alcool sortant en tête de colonne est condensé et envoyé dans le réacteur et,

d) le cas échéant, la quantité stoechiométrique d'eau correspondant à l'alcoxysilane oligomère désiré est introduite en quantités dosées à l'état liquide dans le réacteur.

2. Procédé selon la revendication 1, caractérisé en ce que l'alcool et le chlorosilane alimentent le réacteur dans un rapport constant qui est indépendant du rapport stoechiométrique des partenaires réactionnels dans le produit final désiré.

3. Procédé selon la revendication 1 ou 2, caractérisé en ce que, dans le réacteur, se trouve en plus encore présent un solvant dont le point d'ébullition est plus bas que la température du produit final soutiré à la partie inférieure de la colonne.

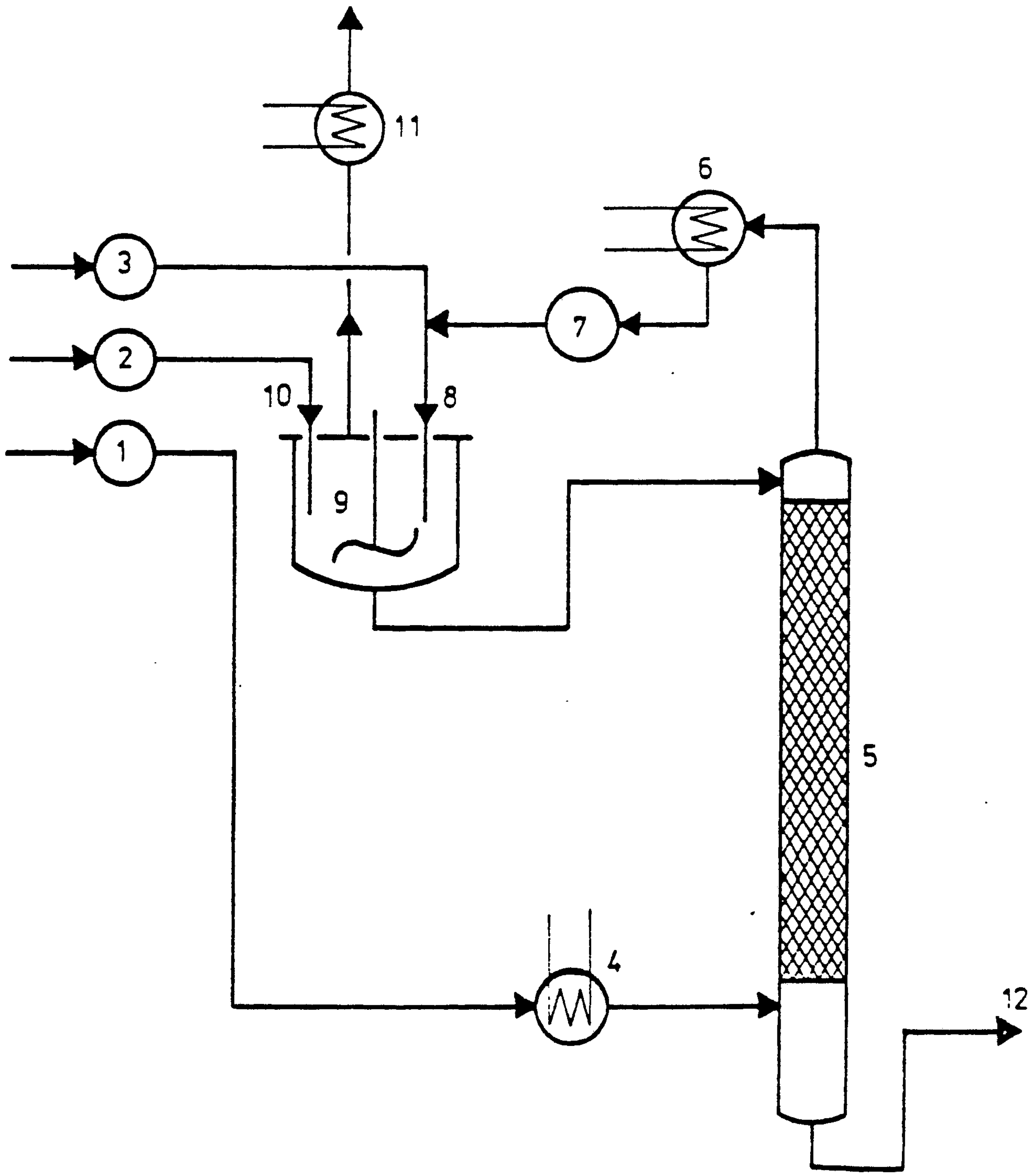
11
6
3
7
2
10
8
1
9
5
4
12